# EUROPEAN PATENT APPLICATION

(11) **EP 4 027 287 A1**
(43) Date of publication of application: **13.07.2022**
(21) Application number: 21196580.1
(22) Date of filing: 14.09.2021
(51) Int. Cl.: G06Q 20/32, G06Q 20/38, G06Q 20/40

(54) **PAYMENT TERMINAL AND PAYMENT MEANS PERFORMING PAYMENT BASED ON PAYMENT TOKEN AND OPERATING METHOD THEREOF**

(30) Priority: 06.01.2021 KR 20210001468
(71) Applicant: Samsung Electronics Co., Ltd., Suwon-si, Gyeonggi-do 16677 (KR)
(72) Inventor: LEE, Jeehyoung, Suwon-si, Gyeonggi-do 16677 (KR)
(74) Representative: Kuhnen & Wacker Patent- und Rechtsanwaltsbüro PartG mbB

(57) **Abstract**

An operating method of a payment terminal configured to perform a payment, including outputting a payment request command and a first payment token; receiving, from at least one payment information generator, a second payment token generated in response to the payment request command; and based on a determination the first payment token corresponds to the second payment token, outputting payment approval information.

## Description

### CROSS-REFERENCE TO RELATED APPLICATION

This application is based on and claims priority under 35 U.S.C. §119 to Korean Patent Application No. 10-2021-0001468, filed on January 6, 2021, in the Korean Intellectual Property Office, the disclosure of which is incorporated by reference herein in its entirety.

### BACKGROUND

### 1. Field

The disclosure relates to a payment terminal, and an operating method thereof, and more particularly, to a payment terminal configured to perform a payment based on correspondence between payment tokens, and an operating method thereof.

### 2. Description of Related Art

Due to the rapid development of integrated circuit (IC) technologies, various payment methods using smart cards or smartphone terminals have been widely used. Moreover, payment methods have gradually expanded to include non-contact communication transactions for user convenience. When transactions are processed by a payment terminal through a contact-communication method, payments are carried out through verification of a personal identification number (PIN) of a card holder, whereas when a noncontact communication method is used for transactions, a payment limit is set as a small amount, and payments are approved without verification of PIN, which however, renders the payments vulnerable to a relay attack.

### SUMMARY

Provided are a payment method of an efficient payment terminal which decreases its vulnerability to a relay attack.

Additional aspects will be set forth in part in the description which follows and, in part, will be apparent from the description, or may be learned by practice of the presented embodiments.

In accordance with an aspect of the disclosure, an operating method of a payment terminal configured to perform a payment includes outputting a payment request command and a first payment token; receiving, from at least one payment information generator, a second payment token generated in response to the payment request command; and based on a determination the first payment token corresponds to the second payment token, outputting payment approval information.

In accordance with an aspect of the disclosure, a payment terminal includes a transmission interface configured to output a payment request command and a first payment token; a reception interface configured to receive, from at least one payment information generator, a second payment token generated in response to the payment request command; and a processor configured to compare the first payment token with the second payment token, and based on a result of the comparison indicating that the first payment token corresponds to the second payment token, output payment approval information.

In accordance with an aspect of the disclosure, an operating method of a payment system including a payment terminal and a payment information generator includes outputting, by the payment terminal, a payment request command and a first payment token; outputting, by the payment information generator, a second payment token based on the first payment token; and based on a determination that the first payment token corresponds to the second payment token, outputting, by the payment terminal, payment approval information.

### BRIEF DESCRIPTION OF THE DRAWINGS

The above and other aspects, features, and advantages of certain embodiments of the present disclosure will be more apparent from the following description taken in conjunction with the accompanying drawings, in which:
FIGS. 1 and 2 are block diagrams schematically illustrating a payment system according to an embodiment;
FIG. 3 is a flowchart illustrating an example of transmission and reception of data to perform a payment;
FIG. 4 is a diagram illustrating an example of a relay attack according to an embodiment;
FIG. 5 is a flowchart illustrating an operating method of a payment terminal according to an embodiment;
FIG. 6 is a diagram illustrating a data packet including a first payment token and a second payment token transmitted and received between a payment terminal and a payment information generator according to an embodiment;
FIG. 7 is a diagram illustrating an example of generation of a first payment token encrypted by an encryption module according to an embodiment;
FIG. 8 is a flowchart illustrating a method of comparing a first payment token with a second payment token by transmitting and receiving the first payment token and the second payment token between a payment terminal and a payment information generator according to an embodiment;
FIG. 9 is a flowchart illustrating an operating method of a payment terminal according to an embodiment;
FIG. 10 is a diagram illustrating a data packet including an anti-collision command and information of response thereto transmitted and received between a payment terminal and a payment information generator according to an embodiment;
FIG. 11 is a flowchart illustrating a method in which unique identification information is received by a payment terminal to compare the unique identification information with a request response token, according to an embodiment;
FIG. 12 is a flowchart illustrating a method of selecting, by a payment terminal according to an embodiment, any one of at least one payment information generator according to a select command, according to an embodiment;
FIG. 13 is a flowchart illustrating an example of selecting, by a payment terminal, any one of a plurality of payment information generators according to an embodiment;
FIG. 14 is a flowchart illustrating an operating method of a payment terminal according to an embodiment;
FIG. 15 is a diagram illustrating a data packet including a transaction approval command and a transaction approval result transmitted and received between a payment terminal and a payment information generator according to an embodiment; and
FIG. 16 is a flowchart illustrating an example in which a payment terminal according to an embodiment receives a transaction approval result and outputs payment approval information.

### DETAILED DESCRIPTION OF THE EMBODIMENTS

Hereinafter, embodiments will be described in detail with reference to the attached drawings.

As is traditional in the field, embodiments may be described and illustrated in terms of blocks which carry out a described function or functions. These blocks, which may be referred to herein as units or modules or the like, or by names such as driver, controller, device, or the like, may be physically implemented by analog or digital circuits such as logic gates, integrated circuits, microprocessors, microcontrollers, memory circuits, passive electronic components, active electronic components, optical components, hardwired circuits, or the like, and may be driven by firmware and software. The circuits may, for example, be embodied in one or more semiconductor chips, or on substrate supports such as printed circuit boards and the like. Circuits included in a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks. Likewise, the blocks of the embodiments may be physically combined into more complex blocks.

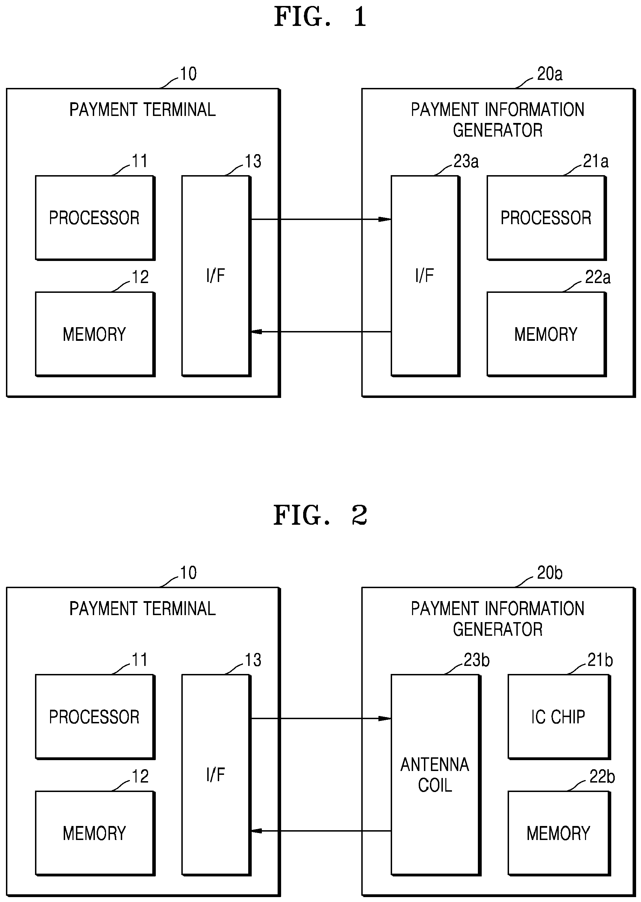

FIGS. 1 and 2 are block diagrams schematically illustrating a payment system according to an embodiment.

With reference to FIGS. 1 and 2, a payment system according to embodiments may include a payment terminal 10 and a payment information generator 20, which may correspond to payment information generator 20a and payment information generator 20b, and a payment may be performed by transmitting and receiving data related to payment information between the payment terminal 10 and the payment information generator 20. The payment terminal 10 may be a terminal device capable of performing a payment by communicating with an external payment server based on information input by a payer or predetermined payment request information. The payment terminal 10 may be referred to as a reader, an interrogator, or a proximity coupling device (PCD). When the payment information generator 20 receives a payment request from the payment terminal 10, the payment information generator 20 may generate payment information in response to the request, and deliver the same to the payment terminal 10. The payment information generator 20 may be mobile devices including a mobile phone, a smartphone, a tablet personal computer (PC), a wearable device, a healthcare device, or an Internet of Things (IoT) device, in which payment information is stored; however, it is not limited to the forgoing, and may be a card including an integrated circuit (IC) chip. That is, the payment information generator 20 may be referred to as a user terminal, a payment card, etc.

A payment terminal 10 according to an embodiment may include a processor 11, a memory 12, and an interface (I/F) such as terminal interface 13, and the terminal interface 13 may include one or more of a transmission interface and a reception interface based on whether it transmits or receives data. The terminal interface 13 may transmit and receive data based on short-distance wireless communication with the payment information generator 20, and by communicating with an external server, the terminal interface 13 may provide payment approval information to the external server or receive a payment request command.

The processor 11 of the payment terminal 10 may generate a payment request command based on information input by a payer or preset payment request information, and provide payment approval information to an external server based on payment information received from the payment information generator 20. According to an embodiment, after a first payment token generated by the payment terminal 10 is provided to the payment information generator 20, the processor 11 of the payment terminal 10 may determine whether to generate payment approval information by comparing a second payment token received from the payment information generator 20 with the first payment token. Further, when the processor 11 of the payment terminal 10 receives unique identification information from the payment information generator 20, the payment terminal 10 may determine whether to generate payment approval information by comparing a previously received request response token with the unique identification information.

The memory 12 of the payment terminal 10 may be a volatile memory serving as a buffer, but may also be a nonvolatile memory configured to store data regardless of supply of power. The memory 12 of the payment terminal 10 may store a payment token generated by the processor 11 and/or a payment token received from the payment information generator 20, and the processor 11 of the payment terminal 10 may perform a comparison by loading payment tokens from the memory 12.

The terminal interface 13 of the payment terminal 10 and an interface 23a of the payment information generator 20 may transmit and receive data through noncontact short-distance wireless communication. For example, the payment terminal 10 and the payment information generator 20 may transmit and receive data via near field communication (NFC). NFC is a noncontact short-distance communication method using a frequency band of 13.56 MHz, and the payment terminal 10 and the payment information generator 20 may transmit and receive data when they approach each other closely, e.g., within a distance of about 10 cm. In embodiments, interfaces such as terminal interface 13, the transmission interface, the reception interface, as well as interface 23a and any other interface discussed herein, may be implemented as or using any one or any combination of a digital modem, a radio frequency (RF) modem, a Wi-Fi chip, and related software and/or firmware, but are not limited thereto. In embodiments, the payment terminal 10 and the payment information generator 20 may perform wireless communication according to general radio frequency identification (RFID) technologies by which communication is established through tagging. A tag may be referred to as a label, a transponder, or a proximity integrated circuit (PICC), and tagging may refer to an act of approaching at least one device having a payment information generator 20 with a short-distance wireless communication tag and a payment terminal 10 configured to perform short-distance wireless communication, by another such device, to be located within a communication range where short-distance wireless communication is carried out.

With reference to FIG. 1, a payment information generator 20a may be a user terminal device including a processor 21a, a memory 22a, and an interface 23a, and perform short-distance wireless communication with the payment terminal 10 through the interface 23a. The processor 21a of the payment information generator 20a according to an embodiment may generate a second payment token based on a first payment token received from the payment terminal. For example, the processor 21a of the payment information generator 20a may generate a second payment token which consists of the same data as in the first payment token. In addition, when receiving a first payment token and a payment request command from the payment terminal 10, the processor 21a may generate an encrypted request response token in response thereto.

The memory 22a of the payment information generator 20a may be a volatile memory serving as a buffer, but may also be a nonvolatile memory configured to store data regardless of supply of power. The memory 22a of the payment information generator 20a may store payment tokens generated by the processor 21a and/or payment tokens received from the payment terminal 10.

With reference to FIG. 2, the payment information generator 20b according to an embodiment may be a payment card including an integrated circuit (IC) chip 21b, a memory 22b, and an antenna coil 23b. When the payment information generator 20b is tagged to the payment terminal 10, the antenna coil 23b included in the payment information generator 20b may induce a current by electromagnetic waves emitted from the payment terminal 10. The induced current may charge a capacitor provided in the payment information generator 20b, and the IC chip 21b may be driven by the current charged in the capacitor to generate radio frequency (RF) signals by modulating and coding prestored connection information. The IC chip 21b of the payment information generator 20b may generate RF signals according to a predetermined method from various types of modulation techniques and coding methods. Modulation may indicate transmission and reception of data by changing amplitudes, frequencies, phases, etc. of RF carrier signals exchanged between the interfaces of the payment terminal 10 and the payment information generator 20b. For example, as for the IC chip 21b, amplitude shift keying (ASK), frequency shift keying (FSK), and phase shift keying (PSK) techniques, etc. may be used. In addition, the IC chip may use the Modified Miller coding method and the Manchester coding method as a coding method.

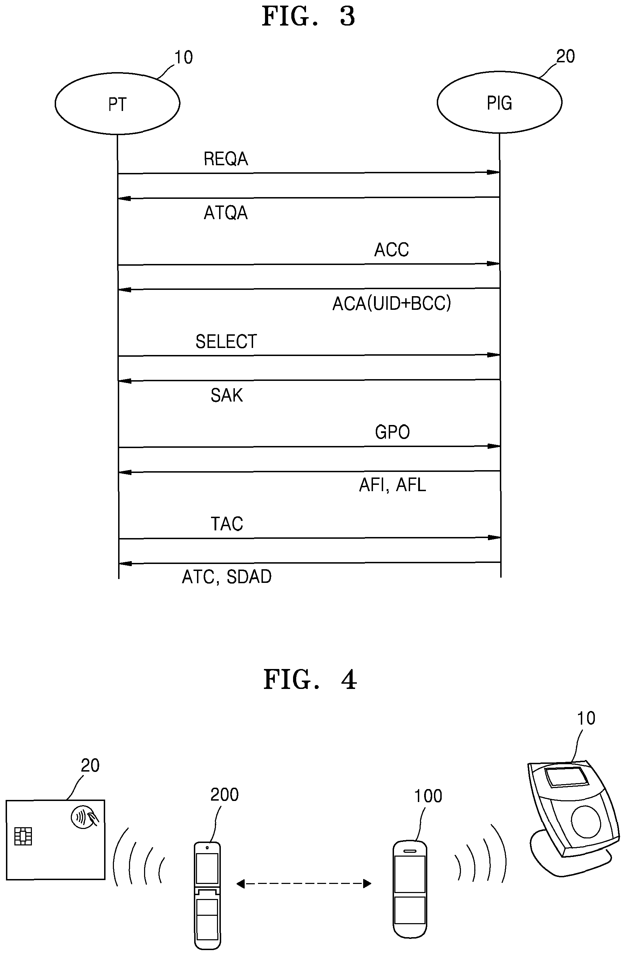

FIG. 3 is a flowchart illustrating an example of transmission and reception of data to perform a payment.

With reference to FIG. 3, the payment terminal 10 (denoted as PT 10) and the payment information generator 20 (denoted as PIG 20) according to an embodiment may perform short-distance wireless communication by transmitting and receiving data according to a certain standard. For example, the payment terminal 10 and the payment information generator 20 may perform short-distance wireless communication according to the ISO 14443 standard. According to the ISO 14443 standard, the payment terminal 10 and the payment information generator 20 may perform wireless NFC using a high frequency band of 13.56 MHz. Hereinafter, the transmission and reception operations of the payment terminal 10 and the payment information generator 20 are described according to the ISO 14443 standard; however, embodiments may also be applied to short-distance wireless communication according to other standards besides the ISO 14443 standard.

The payment terminal 10 configured to transmit and receive data according to a certain standard may repeatedly output a payment request command REQA of type A. Rather than transmitting a payment request command REQA to a certain payment information generator 20, the payment terminal 10 may continuously send a payment request command REQA until it receives from at least one payment information generator 20 request response information ATQA regarding the payment request command. The payment information generator 20 which has received the payment request command REQA may transmit request response information ATQA to the payment terminal 10. According to an embodiment, the payment information generator 20 may inform the payment terminal 10 of whether the payment information generator 20 supports an anti-collision function, along with the request response information ATQA. At this time, the payment terminal 10 may determine whether a plurality of payment information generators 20 are arranged near the payment terminal 10 based on the number of received request response information ATQA.

When the payment information generator 20 supports an anti-collision function, the payment terminal 10 may output an anti-collision command ACC. A plurality of payment information generators 20, which have received the anti-collision command ACC may transmit anti-collision response information ACA including unique identification information UID regarding each payment information generator 20. At this time, the payment terminal 10 may predict whether to receive anti-collision response information ACA from the plurality of payment information generators 20 based on the number of received request response information ATQA, and when receiving a plurality of request response information ATQA, it may perform an anti-collision function to avoid signal interference. For example, the payment terminal 10 may determine at which bit the plurality of anti-collision response information ACA starts to change by comparing received data bit by bit.

The payment terminal 10 may output a select command SELECT specifying any one of the payment information generators 20 corresponding to the plurality of anti-collision response information ACA. The select command SELECT may include bits up to a bit at which the plurality of anti-collision response information ACA starts to change. For example, when a first anti-collision response information ACA₁ begins with '00101,' and a second anti-collision response information ACA₂ starts with '00100,' the payment terminal 10 may generate a select command SELECT including '00100' to specify a payment information generator 20 corresponding to the second anti-collision response information ACA₂. The selected payment information generator 20 from a plurality of payment information generators 20 may output select response information SAK regarding the select command SELECT. Accordingly, the payment terminal 10 may obtain unique identification information UID of the payment information generator 20 to perform a payment.

The payment terminal 10 which has obtained the unique identification information UID of a specific payment information generator 20 may transmit a transaction start command GPO to the specific payment information generator 20. The payment information generator 20 which has received the transaction start command GPO may transmit application family identifier (AFI) information and application file locator (AFL) information for starting a transaction to the payment terminal 10. The payment terminal 10, which has initiated a transaction, may receive from an external server information indicating that the transaction has been approved, and may transmit a transaction approval command TAC to the payment information generator 20. The payment information generator 20 which has received the transaction approval command TAC may transmit application transaction counter (ATC) information and signed dynamic application data (SDAD) information to the payment terminal 10. The payment terminal 10 may transmit, from a payment request command REQA to a transaction approval command TAC to the payment information generator 20, and by receiving information of response thereto, complete a transaction through noncontact short-distance communication.

FIG. 4 is a diagram illustrating an example of performance of a relay attack according to an embodiment.

With reference to FIG. 3, when a transaction progresses normally through NFC, the payment terminal 10 and the payment information generator 20 may complete a payment by transmitting and receiving a plurality of commands and response information within a short distance. With reference to FIG. 4, a first emulator 100 may transmit and receive data with the payment terminal 10 and, a second emulator 200 may transmit and receive data with the payment information generator 20. The second emulator 200 may acquire unique identification information of the payment information generator 20 by transmitting a fake payment request command to the payment information generator 20, and provide the acquired unique identification information to the first emulator 100. That is, data may be transmitted and received through the first emulator 100 and the second emulator 200 even when the payment terminal 10 and the payment information generator 20, which transmit and receive data via short-distance wireless communication, are located at a long distance from each other. A relay attack may refer to an act of capturing personal information without consent of a user of the payment information generator 20, by transmitting a fake payment request command to the payment information generator 20 through the second emulator 200, and receiving, by the payment terminal 10, information corresponding to the fake payment request command from the payment information generator 20.

The first emulator 100 may amplify or modulate commands received from the payment terminal 10 through NFC, and provide them to the second emulator 200. For example, the first emulator 100 and the second emulator 200 may employ Bluetooth or long-distance communication methods for the first emulator 100 to transmit commands to the second emulator 200 located at a longer distance compared to an NFC communication distance. The commands received through short-distance communication may be converted into communication standards supported by long-distance communication for the first emulator 100 and the second emulator 200 to transmit and receive data through long-distance communication. The second emulator 200 which has received commands converted into communication standards supported by long-distance communication may reconvert the commands into NFC standards for transmission to the payment information generator 20. That is, by operating as a fake payment information generator, the first emulator 100 may mislead the payment terminal 10 into believing that the payment terminal 10 is communicating with the payment information generator 20, and by operating as a fake payment terminal, the second emulator 200 may mislead the payment information generator 20 into believing that the payment information generator 20 is communicating with the payment terminal 10.

In this regard, the payment terminal 10 and the payment information generator 20 according to a comparative embodiment may measure time for transmission and reception of data, and when the measured time is within a predetermined threshold time, determine in response that the data is transmitted and received normally. When the commands and information are stolen and emulated by the first emulator 100 and the second emulator 200, the time for the response information regarding the transmission of commands to be received by the payment terminal 10 may become longer compared to that of normal transactions, and relay attacks may be prevented.

As for a method of preventing a relay attack based on a time required for data exchange between the payment terminal 10 and the payment information generator 20 according to a comparative embodiment, because hardware performance may vary depending on its manufacturer, the data exchange response time may not be specified uniformly. In addition, a distance between the payment terminal 10 and the payment information generator 20 may also generate a difference in the response time. A data relay time between the first emulator 100 and the second emulator 200 may be reduced according to performance of the first emulator 100 and the second emulator 200, and accordingly, the payment terminal 10 and the payment information generator 20 may not detect occurrence of a relay attack when it actually has occurred. Accordingly, there may be a limit on the method of detecting a relay attack based on a time required for data exchange according to a comparative embodiment.

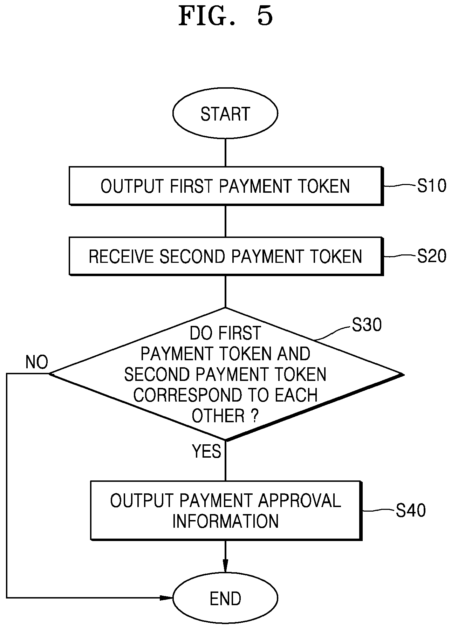

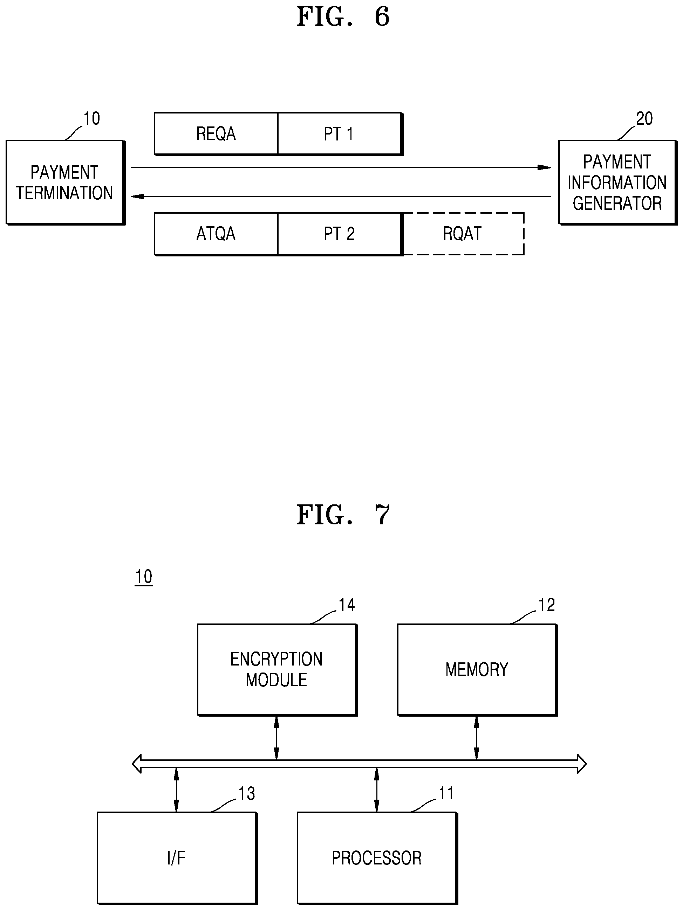

FIG. 5 is a flowchart illustrating an operating method of a payment terminal 10 according to embodiments, and FIG. 6 is a diagram illustrating a data packet including a first payment token PT1 and a second payment token PT2 transmitted and received between the payment terminal 10 and the payment information generator 20 according to an embodiment.

With reference to FIGS. 5 and 6, the payment terminal 10 may determine whether to output payment approval information based on a result of comparison between the first payment token PT1 and the second payment token PT2. For example, when the first payment token PT1 and the second payment token PT2 correspond to each other, the payment terminal 10 may output payment approval information in response thereto.

In operation S10, the payment terminal 10 may output the first payment token PT1. The first payment token PT1 may be token information generated for each payment by the payment terminal 10, and may be an encrypted random number consisting of or including a series of bits. Rather than outputting the first payment token PT1 to a specific payment information generator 20, the payment terminal 10 may repeatedly send signals including the first payment token PT1, and when the payment information generator 20 is located within a distance which allows short-distance wireless communication, the payment information generator 20 may receive signals including the first payment token PT1. The payment terminal 10 according to an embodiment may generate the payment request command REQA and the first payment token PT1 based on external server information or predetermined payment request information along with the first payment token PT1.

In operation S20, the payment terminal 10 may receive the second payment token PT2 from at least one payment information generator 20. The second payment token PT2 may be token information corresponding to the first payment token PT1 received from the payment terminal 10, for example, token information consisting of or including the same bits as in the received first payment token PT1. That is, when the first payment token PT1 generated from the payment terminal 10 is delivered to at least one payment information generator 20, the payment information generator 20 may generate a second payment token PT2 consisting of or including the same bits as in the first payment token PT1.

In contrast, when a relay attack in which a fake payment request command is transmitted to the payment information generator 20 by an emulator occurs, a payment token generated along with the fake payment request command may be composed of a data packet different from that of the first payment token generated by the payment terminal. That is, the data which the payment information generator 20 receives along with the fake payment request command may have a different value from the first payment token PT1, and the second payment token PT2 may be generated to have a different value from the first payment token PT1.

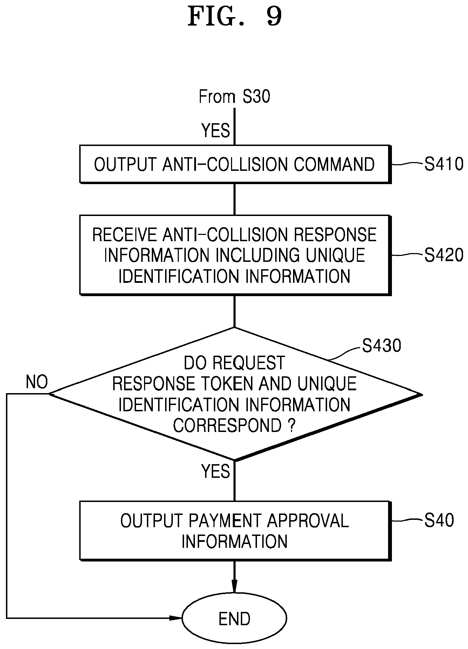

The payment information generator 20 may transmit request response information ATQA and request response token RQAT to the payment terminal 10 in response to the payment request command REQA. The request response token RQAT may be data generated to have an encrypted value to determine whether it corresponds to unique identification information UID to be received afterwards. Examples including determining whether a relay attack has occurred based on a request response token RQAT will be further explained in detail with reference to FIGS. 9 to 11.

In operation S30, the payment terminal 10 may determine whether the first payment token PT1 corresponds to the second payment token PT2. For example, the payment terminal 10 may determine whether the first payment token PT1 and the second payment token PT2 have the same length, and when they do, further determine whether they correspond to each other by comparing bit by bit from a first read bit to a last read bit to see if each of them is identical to the other.

In operation S40, when the payment terminal 10 determines that the first payment token PT1 and the second payment token PT2 correspond, it may output payment approval information. The payment approval information may be information indicating that response information regarding the payment request command REQA or the transaction approval command TAC is received normally and that a payment is therefore approved, and the payment terminal may complete the payment by outputting payment approval information. A payment approval may be a result of reception of commands from an external server or determination of payment approval by the payment terminal itself. When the first payment token PT1 generated by the payment terminal 10 and the second payment token PT2 consisting of or including the same bits as in the first payment token PT1 correspond, the payment terminal 10 may determine that no relay attack has occurred, and accordingly, complete a payment by outputting payment approval information to an external server and/or the payment information generator 20.

In operation S30, when the first payment token PT1 and the second payment token PT2 do not correspond, the payment terminal 10 may determine that a relay attack has occurred, and may not output payment approval information, and further suspend the payment.

With reference to FIG. 6, the payment terminal 10 may provide a payment request command REQA and a first payment token PT1 to at least one payment information generator 20. The payment terminal 10 may generate a first payment token PT1 having different values for each payment, and the first payment token PT1 may be encrypted random number information. For example, the payment terminal 10 may generate as the first payment token PT1 a value into which a serial number of the terminal has been encrypted according to a certain encryption algorithm. Embodiments concerning the encryption of the first payment token PT1 will be described with reference to FIG. 7. According to an embodiment, the payment terminal 10 may generate a first payment token PT1 having different values for each payment, which may prevent emulation or other theft of the first payment token PT1 by an external attacker.

Each of at least one payment information generator 20 which has received the first payment token PT1 from the payment terminal 10 may generate request response information ATQA in response to a payment request command REQA. The request response information ATQA may be information indicating that a payment request command REQA has been received, and the payment information generator 20 is ready to receive a follow-up command to perform a payment.

The payment information generator 20 may receive a second payment token PT2 consisting of or including the same bits as in data received as the first payment token PT1. At this time, as the data composition of the data received by the payment information generator 20 as the first payment token PT1 may be different from that of the first payment token PT1 generated by the payment terminal 10 when a relay attack has occurred, the payment information generator 20 may generate the second payment token PT2 having a different value from the first payment token PT1.

According to an embodiment, the payment information generator 20 may generate a request response token RQAT along with request response information ATQA. The payment information generator 20 may generate a request response token RQAT having different values for each payment, and the request response token RQAT may be encrypted random number information. For example, the payment information generator 20 may generate a value into which a serial number of the generator has been encrypted according to a certain encryption algorithm as a request response token RQAT. That is, the payment terminal 10 according to an embodiment may generate an encrypted first payment token PT1, and the payment information generator 20 may generate an encrypted request response token RQAT.

FIG. 7 is a diagram illustrating an example of generation of a first payment token PT1 encrypted by an encryption module 14 according to an embodiment.

With reference to FIG. 7, the payment terminal 10 may further include an encryption module 14, and the encryption module 14 may generate the first payment token PT1 encrypted according to an encryption request of the processor. The encryption module 14 may perform, for example, encryption of data by using an advanced encryption standard (AES) algorithm. FIG. 7 illustrates that the encryption module 14 and the processor 11 are implemented as each separate module; however, unlike this, the encryption module 14 and the processor 11 may be implemented as a single module. In addition, an encryption algorithm used by the encryption module 14 to generate the first payment token PT1 may not be limited to the AES algorithm, and may include algorithms which irreversibly generate random numbers, such as an OTP generation algorithm.

According to an embodiment, the encryption module 14 may receive an encryption key and unique information regarding a terminal subject to encryption from the memory 12. The encryption module 14 may encrypt the unique information regarding a terminal into the first payment token PT1 by using a certain encryption algorithm based on the encryption key and the unique information regarding the terminal. The encryption module 14 may provide the first payment token PT1 to at least one of the processor 11, the memory 12, and the terminal interface 13. According to control operation by the processor, the memory may store the first payment token PT1, and the interface may output the first payment token PT1.

FIG. 7 illustrates an embodiment in which the payment terminal 10 generates the first payment token PT1; however, the payment information generator 20 may also generate a request response token RQAT by encrypting unique information regarding the payment information generator 20 as in the embodiment described in FIG. 7.

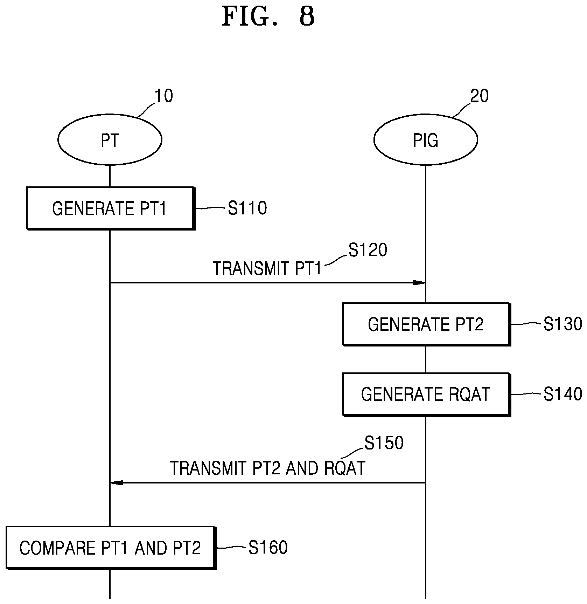

FIG. 8 is a flowchart illustrating a method of comparing the first payment token PT1 and the second payment token PT2 by transmitting and receiving the first payment token PT1 and the second payment token PT2 between the payment terminal 10 and the payment information generator 20.

With reference to FIG. 8, the payment terminal 10 may transmit the first payment token PT1 along with the payment request command REQA to at least one payment information generator 20, and in response to this, the at least one payment information generator 20 may transmit request response information ATQA and the second payment token PT2 to the payment terminal 10. In addition, according to an embodiment, at least one payment information generator 20 may transmit request response token RQAT encrypted by each payment information generator 20 along with request response information ATQA to the payment terminal 10.

In operation S110, the payment terminal 10 may generate the first payment token PT1 which is encrypted with different values for each payment request. As the payment terminal 10 may maintain the encrypted first payment token PT1 unchanged until a payment is approved after once a payment request has been made, it may check afterwards whether the first payment token PT1 corresponds to a second payment token PT2 to be received from at least one payment information generator 20.

In operation S120, the payment terminal 10 may transmit the first payment token PT1 along with the payment request command REQA to at least one payment information generator 20. The payment terminal 10 may repeatedly send signals, rather than transmitting the payment request command REQA and the first payment token PT1 to a specific payment information generator 20, and when at least one payment information generator 20 which has approached within a certain distance receives the sent signals, communication may be established.

In operation S130, at least one payment information generator 20 may generate the second payment token PT2 based on the received first payment token PT1. The second payment token PT2 may be a data packet consisting of or including the same bits as in the received first payment token PT1. When a relay attack has occurred between the payment terminal 10 and the payment information generator 20, the payment information generator 20 may receive a fake payment token corresponding to a fake payment request command of an emulator; however, when no relay attack has occurred, the payment information generator 20 may receive a data packet having the same value as the first payment token PT1.

In operation S140, at least one payment information generator 20 may generate request response information ATQA in response to a payment request command REQA. The request response information ATQA may be information indicating that a payment request command REQA has been received, and the payment information generator 20 is ready to receive a follow-up command to perform a payment.

Each of at least one payment information generator 20 according to an embodiment may further generate a request response token RQAT based on unique information regarding the generator and the encryption module. The request response token RQAT may be encrypted information generated based on the unique information regarding the payment information generator 20, and may be encryption information corresponding to the unique identification information UID regarding the payment information generator 20.

In operation S150, at least one payment information generator 20 may transmit the second payment token PT2 and request response information ATQA to the payment terminal 10. In addition, at least one payment information generator 20 may transmit a generated request response token RQAT to the payment terminal 10, and the payment terminal 10 may store the request response token RQAT of the payment information generator 20. Examples including determining whether a relay attack has occurred based on a request response token RQAT by based on the payment terminal 10 will be further explained in detail with reference to FIGS. 9 to 11.

In operation S160, the payment terminal 10 may compare the first payment token PT1 with the second payment token PT2. When the payment terminal 10 determines that the first payment token PT1 and the second payment token PT2 correspond, it may output payment approval information by performing follow-up operations; however, when the first payment token PT1 and the second payment token PT2 do not correspond, the payment terminal 10 may determine that the possibility of relay attack is high and thus, reject a payment approval.

That is, unlike a comparative embodiment in which occurrence of relay attack is determined based on a data exchange time, the payment system, including the payment terminal 10 and at least one payment information generator 20 may determine whether a relay attack has occurred without considering an exchange time, which may change according to performance of the payment terminal 10 or the payment information generator 20. Further, the payment terminal 10 may detect a possibility of relay attack without additional cost by varying composition of data packets subject to transmission and reception.

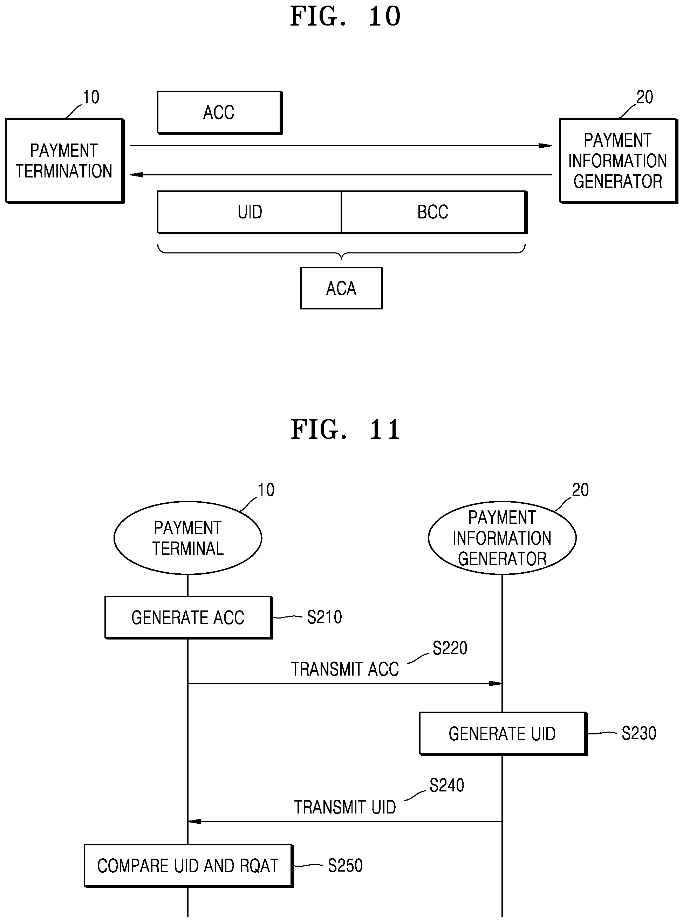

FIG. 9 is a flowchart illustrating an operating method of a payment terminal 10 according to embodiments, and FIG. 10 is a diagram illustrating a data packet including an anti-collision command ACC and information of response thereto transmitted and received between the payment terminal 10 and the payment information generator 20 according to an embodiment.

With reference to FIGS. 9 and FIG. 10, the payment terminal 10 according to an embodiment may output, when the first payment token PT1 and the second payment token PT2 correspond to each other, an anti-collision command ACC in response thereto, and when a request response token RQAT and unique identification information UID received from at least one payment information generator 20 correspond, may output payment approval information in response thereto.

In operation S410, the payment terminal 10 may transmit an anti-collision command ACC to at least one payment information generator 20 which has replied with request response information ATQA. The anti-collision command ACC may be a command for requesting anti-collision response information ACA including unique identification information UID from at least one payment information generator 20, and when there are multiple payment information generators 20, it may be a command for avoiding collision of signals among the multiple payment information generators 20.

In operation S420, the payment terminal 10 may receive anti-collision response information ACA including unique identification information UID from at least one payment information generator 20 in response to an anti-collision command ACC. The unique identification information UID may be information indicating each of payment information generators 20, and the payment terminal 10 may specify at least one payment information generator 20 based on the unique identification information UID. According to an embodiment, when the payment information generator 20 has generated a request response token RQAT along with request response information ATQA, it may output the request response token RQAT as unique identification information UID.

In operation S430, the payment terminal 10 may determine whether the request response token RQAT and the unique identification information UID correspond. For example, the payment terminal 10 may determine whether the request response token RQAT and the unique identification information UID have the same length, and when they do, further determine whether they correspond to each other by comparing bit by bit from a first read bit to a last read bit to see if each of them is identical to the other.

In operation S40, when the payment terminal 10 determines that the request response token RQAT and the unique identification information UID correspond, it may output payment approval information. When unique identification information UID consisting of or including the same bits as in a request response token RQAT and a request response token RQAT generated by the payment information generator 20 correspond, the payment terminal 10 may determine that no relay attack has occurred, and accordingly, complete a payment by outputting payment approval information to an external server and/or the payment information generator 20.

According to FIG. 9, the payment terminal 10 may determine whether a request response token RQAT received before outputting an anti-collision command ACC, and unique identification information UID received after outputting the anti-collision command ACC correspond. That is, the payment terminal 10 may also detect whether a relay attack has occurred after outputting an anti-collision command ACC, even when no relay attack had occurred before outputting the anti-collision command ACC.

With reference to FIG. 10, the payment terminal 10 may provide an anti-collision command ACC to at least one payment information generator 20 which has replied with request response information ATQA. Each of at least one payment information generator 20 which has received the anti-collision command ACC from the payment terminal 10 may generate anti-collision response information ACA in response to the anti-collision command ACC. The anti-collision response information ACA may be information indicating that an anti-collision command ACC has been received, and the payment information generator 20 is ready to receive a follow-up command to perform a payment. For example, the payment terminal 10 which has received signals from a plurality of payment information generators 20 may distinguish the plurality of signals based on anti-collision response information ACA and thus, prevent collision among the plurality of signals. The anti-collision response information ACA may consist of unique identification information UID and a block check character BCC generated based on the unique identification information UID.

According to an embodiment, at least one payment information generator 20 may generate unique identification information UID and a block check character BCC as anti-collision response information ACA. The unique identification information UID may be information indicating each of at least one payment information generator 20, and the payment terminal 10 may specify a payment information generator 20 based on the unique identification information UID. The block check character BCC may be information generated based on the unique identification information UID, and may be data for detecting whether there is an error in anti-collision response information ACA. The payment information generator 20 may generate a block check character BCC according to an exclusive OR operation of unique identification information UID. For example, when the payment information generator 20 has generated a 4-byte unique identification information UID, a block check character BCC may be output by performing an exclusive OR operation for each byte.

According to an embodiment, the payment information generator 20 may output a request response token RQAT generated in response to a payment request command REQA as unique identification information UID. The payment terminal 10 may store the request response token RQAT received from the payment information generator 20, and compare the unique identification information UID with the request response token RQAT generated in response to the anti-collision command ACC. That is, the payment terminal 10 may determine whether a relay attack has occurred by determining whether parts of information included in response information received in response to the payment request command REQA and received in response to an anti-collision command ACC correspond.

FIG. 11 is a flowchart illustrating a method in which unique identification information UID is received by the payment terminal 10 according to an embodiment to compare the unique identification information UID with a request response token RQAT.

With reference to FIG. 11, the payment terminal 10 may transmit an anti-collision command ACC to the payment information generator 20, and in response to this, at least one payment information generator 20 may transmit anti-collision response information ACA including unique identification information UID and a block check character BCC to the payment terminal 10.

In operation S210, the payment terminal 10 may generate, when the first payment token PT1 and the second payment token PT2 correspond, an anti-collision command ACC, and in operation S220, it may transmit the generated anti-collision command ACC to at least one payment information generator 20 which has transmitted request response information ATQA.

In operation S230, at least one payment information generator 20 may generate unique identification information UID in response to a received anti-collision command ACC. The payment information generator 20 may generate a request response token RQAT generated in response to a payment request command REQA as unique identification information UID. In addition, the payment information generator 20 may generate a block check character BCC based on the unique identification information UID, and generate a data packet combining the unique identification information UID and the block check character BCC as anti-collision response information ACA.

In operation S240, at least one payment information generator 20 may transmit unique identification information UID to the payment terminal 10, and according to an embodiment, it may output a data packet combining the unique identification information UID and the block check character BCC as anti-collision response information ACA for an anti-collision command ACC.

In operation S250, the payment terminal 10 which has received anti-collision response information ACA may determine whether unique identification information UID and a request response token RQAT correspond by comparing the unique identification information UID with the request response token RQAT. The unique identification information UID and the request response token RQAT may be a data packet received in response to each different command; however, the payment information generator 20 may output unique identification information UID and the request response token RQAT as the same value. That is, when a relay attack occurs during at least one response process regarding each different command, unique identification information UID and a request response token RQAT may not correspond, which may lead to rejection of a payment approval by the payment terminal 10.

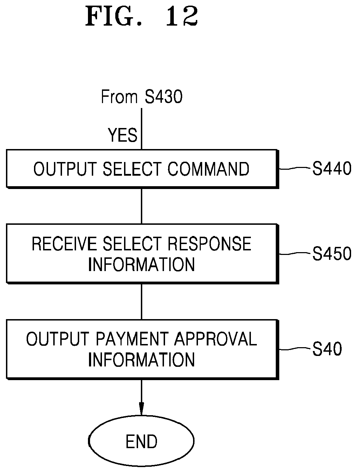

FIG. 12 is a flowchart illustrating a method of selecting, by the payment terminal 10 according to an embodiment, any one of at least one payment information generator 20 according to a select command SELECT.

With reference to FIG. 12, the payment terminal 10 may output, when unique identification information UID and a request response token RQAT correspond, a select command SELECT to any one of at least one payment information generator 20 in response thereto. The payment terminal 10 may receive select response information SAK from a selected payment information generator 20 and output payment approval information by transmitting and receiving payment information.

In operation S440, the payment terminal 10 may transmit a select command SELECT to any one of at least one payment information generator 20. When the payment terminal 10 has received a plurality of unique identification information UID, the payment terminal 10 may select any one piece of the unique identification information UID, and output a select command SELECT including the selected unique identification information UID.

In operation S450, at least one payment information generator 20 may receive a select command SELECT, and a payment information generator 20 corresponding to unique identification information UID included in the select command SELECT may transmit select response information SAK to the payment terminal 10. Accordingly, the payment terminal 10 may specify a certain payment information generator 20 for performing the payment, and in operation S40, it may perform the payment by receiving payment information from the selected payment information generator 20.

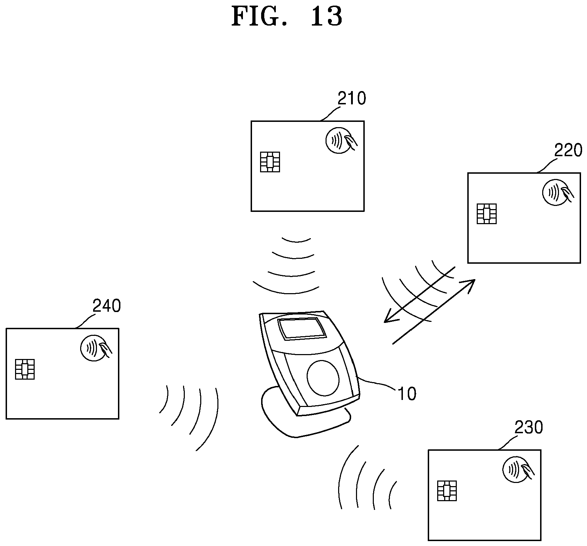

FIG. 13 is a flowchart illustrating an example of selecting, by the payment terminal 10, any one of a plurality of payment information generators 20 according to an embodiment.

With reference to FIG. 13, when the payment terminal 10 has received request response information ATQA and anti-collision response information ACA from a plurality of payment information generators 20, the payment terminal 10 may include any one piece of unique identification information UID from a plurality of unique identification information UID in a select command SELECT for outputting. A plurality of payment information generators 20 may receive the select command SELECT, and each of the payment information generators 20 may compare unique identification information UID included in the select command SELECT with unique identification information UID stored in its memory. At this time, when the unique identification information UID stored in the memory of a particular payment information generator 20 corresponds to the unique identification information UID included in the select command SELECT, the particular payment information generator 20 may transmit select response information SAK to the payment terminal 10. That is, a payment information generator 20 corresponding to the unique identification information UID included in the select command SELECT may determine that it has been selected as a payment information generator 20 for performing the payment among multiple payment information generators 20, and transmit select response information SAK for performing follow-up payment operations to the payment terminal 10.

According to FIG. 13, the payment terminal 10 may perform noncontact short-distance wireless communication with four payment information generators, for example payment information generator 210, payment information generator 220, payment information generator 230, and payment information generator 240, and receive unique identification information UID corresponding to the four payment information generators 210 to 240. The payment terminal 10 may select any one piece of the four unique identification information, for example a unique identification information UID corresponding to payment information generator 220, and output a select command SELECT including the selected unique identification information. At this time, the payment terminal 10 may transmit the select command SELECT toward the four payment information generators 210 to 240, rather than transmitting the select command SELECT to a payment information generator 20 corresponding to the selected unique identification information UID. The respective payment information generators 210 to 240 may receive the select command SELECT, and compare the unique identification information included in the received select command SELECT with unique identification information stored in the memory. As for the second payment information generator 220, unique identification information UID stored in the memory may correspond to the unique identification information included in the select command SELECT and thus, may transmit select response information SAK to the payment terminal 10. Accordingly, the payment terminal 10 and the second payment information generator 220 may perform a payment by transmitting and receiving the payment information.

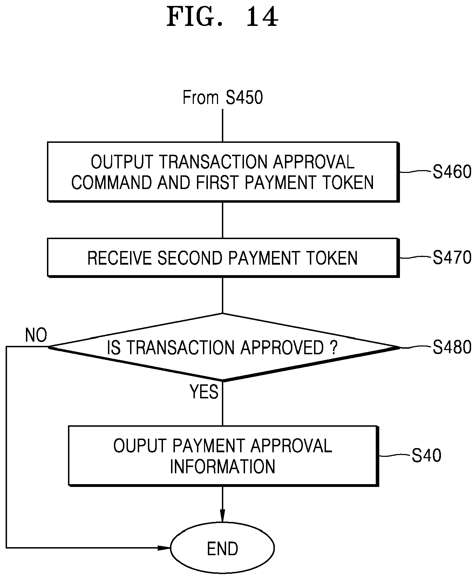

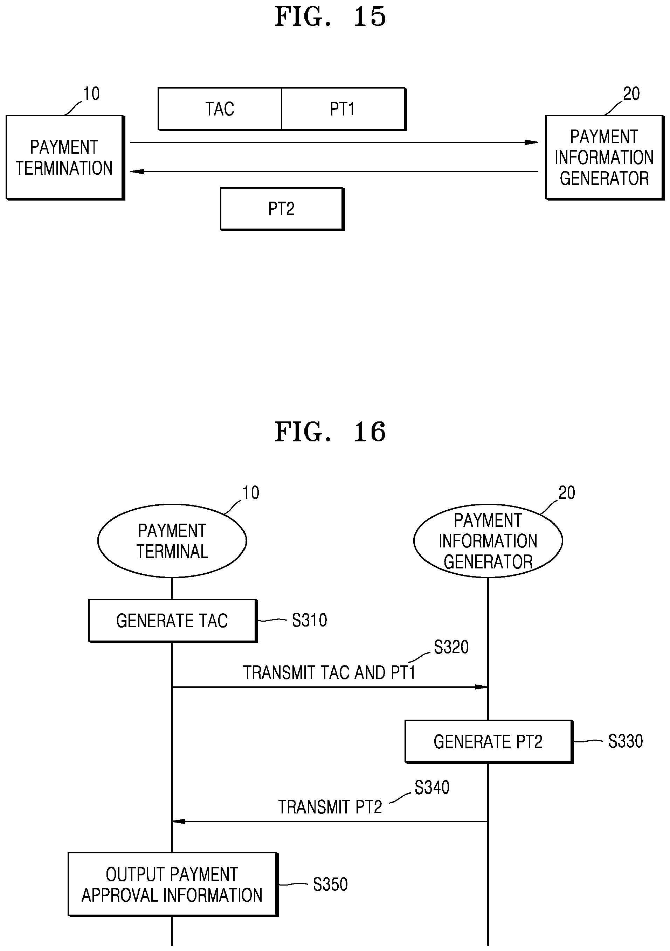

FIG. 14 is a flowchart illustrating an operating method of a payment terminal 10 according to embodiments, and FIG. 15 is a diagram illustrating a data packet including a transaction approval command TAC and a transaction approval result TAR transmitted and received between the payment terminal 10 and the payment information generator 20 according to an embodiment.

With reference to FIG. 14, the payment terminal 10 may output a first payment token PT1 and a transaction approval command TAC to a selected payment information generator 20, and output payment approval information based on a second payment token PT2 received from the payment information generator 20. The payment information generator 20 may transmit the second payment token PT2 corresponding to the first payment token PT1 to the payment terminal 10 in response to a transaction approval command TAC.

In operation S460, the payment terminal 10 may output a transaction approval command TAC to a selected payment information generator 20. According to an embodiment, the payment terminal 10 may start a transaction by transmitting a transaction start command GPO after receiving select response information SAK from a selected payment information generator 20, and transmit and receive payment information with the selected payment information generator 20. As a result of the transmission and reception of payment information, the payment terminal 10 may transmit a transaction approval command TAC to the selected payment information generator 20 to complete the transaction. The payment terminal 10 may transmit the first payment token PT1 along with the transaction approval command TAC to the selected payment information generator 20. The first payment token PT1 may be a token generated along with a payment request command REQA and stored in the memory of the payment terminal 10.

In operation S470, the payment terminal 10 may receive the second payment token PT2 generated by the payment information generator 20. The payment information generator 20 may store the second payment token PT2 generated by the payment request command REQA, and provide the stored second payment token PT2 to the payment terminal 10. The second payment token PT2 may be a token generated based on the first payment token PT1 received with the payment request command REQA, and the payment information generator 20 may determine whether a relay attack has occurred in at least one process of the receiving process of the payment request command REQA and the receiving process of the transaction approval command TAC. That is, the payment system may detect occurrence of relay attack by stages from commencement of payment through its completion by approving the transaction. In addition, the payment system may compare the first payment token PT1 with the second payment token PT2 not only in the payment terminal 10 but the payment information generator 20 and thus, detect occurrence of relay attack in at least one process of the data transmission process and the data reception process.

In operation S480, the payment terminal 10 may compare the first payment token PT1 generated in response to a transaction approval command TAC with a received second payment token PT2, and based on the comparison result, determine whether a transaction has been approved. When the first payment token PT1 and the second payment token PT2 are different, the payment terminal 10 may terminate the transaction, and when the first payment token PT1 and the second payment token PT2 correspond, the transaction may proceed to operation S40.

In operation S40, when the transaction has been approved, the payment terminal 10 may complete the payment by outputting payment approval information in response to the approval. In contrast, when the transaction has not been approved, the payment terminal 10 may not complete the payment, and therefore may not output payment approval information. In other words, when the transaction has not been approved, the payment terminal 10 may complete a payment process without outputting payment approval information because a payment has not occurred.

With reference to FIG. 15, the payment terminal 10 may provide a transaction approval command TAC and the first payment token PT1 to the payment information generator 20. The payment terminal 10 may store the first payment token PT1 generated at the time of outputting the payment request command REQA, and output the first payment token PT1 stored at the time of outputting the transaction approval command TAC once more to the payment information generator 20. Accordingly, although the first payment token PT1 is random number information encrypted into different values for each payment, the payment terminal 10 may output the same token both when outputting the payment request command REQA and outputting the transaction approval command TAC.

When the payment information generator 20 has received the first payment token PT1 along with the transaction approval command TAC, it may provide the second payment token PT2 stored by the memory to the payment terminal 10. The second payment token PT2 may be a payment token generated in response to the payment request command REQA.

FIG. 16 is a flowchart illustrating an example in which the payment terminal 10 according to an embodiment receives a transaction approval result TAR and outputs payment approval information.

With reference to FIG. 16, the payment terminal 10 may transmit the first payment token PT1 along with the transaction approval command TAC to a selected payment information generator 20, and in response to this, the payment information generator 20 may transmit the second payment token PT2 to the payment terminal 10. The payment terminal 10 which has received the second payment token PT2 may determine whether to output payment approval information according to whether the first payment token PT1 and the second payment token PT2 correspond.

In operation S310, the payment terminal 10 may determine whether to generate a payment approval command according to the transmitted and received payment information after receiving select response information SAK. When the payment terminal 10 determines that a transaction can be approved based on transmitted and received payment information after commencement of a transaction, it may generate a payment approval command.

In operation S320, the payment terminal 10 may transmit the first payment token PT1 stored in the memory along with the payment approval command to a selected payment information generator 20. In operation S330, the payment information generator 20 may load the second payment token PT2 generated in response to the payment request command REQA, and in operation S340, the payment information generator 20 may transmit the second payment token PT2 to the payment terminal 10.

In operation S350, the payment terminal 10 may determine whether to output payment approval information according to a comparison result between the first payment token PT1 and the second payment token PT2. When the payment terminal 10 determines that the first payment token PT1 and the second payment token PT2 correspond, it may determine that no relay attack has occurred in the process of performing a transaction approval and thus, output payment approval information.

While embodiments have been particularly shown and described with reference to embodiments thereof, it will be understood that various changes in form and details may be made therein without departing from the spirit and scope of the following claims.

## Claims

1. An operating method of a payment terminal configured to perform a payment, the method comprising:
outputting a payment request command and a first payment token;
receiving, from at least one payment information generator, a second payment token generated in response to the payment request command; and
based on a determination the first payment token corresponds to the second payment token, outputting payment approval information.

2. The operating method of claim 1, wherein the payment request command corresponds to payment request from among a plurality of payment requests, and
wherein the first payment token is encrypted with a different value for each payment request of the plurality of payment requests.

3. The operating method of claim 1, wherein the second payment token is a data packet generated by the at least one payment information generator based on the first payment token.

4. The operating method of claim 1, wherein the receiving of the second payment token includes receiving, from the at least one payment information generator, request response information and a request response token corresponding to the payment request command.

5. The operating method of claim 4, further comprising:
based on the determination that the first payment token corresponds to the second payment token, outputting an anti-collision command; and
receiving, from the at least one payment information generator, unique identification information generated based on the anti-collision command.

6. The operating method of claim 5, wherein the receiving of the request response token includes storing the request response token, and
wherein the outputting of the payment approval information includes, based on a determination that the unique identification information does not correspond to the request response token, suspending a payment approval.

7. The operating method of claim 5,
wherein the receiving of the request response token includes storing the request response token,
wherein the unique identification information includes at least one piece of unique identification information corresponding to the at least one payment information generator, and
wherein the operating method further comprises:
based on a determination that a piece of unique identification information from among the at least one piece of unique identification information corresponds to the request response token, outputting a select command including the piece of unique identification information; and
receiving select response information from a payment information generator corresponding to the piece of unique identification information.

8. The operating method of claim 7, wherein the outputting of the payment approval information includes:
transmitting the first payment token and a transaction approval command to the payment information generator; and
determining whether to output the payment approval information according to a result of comparison between the first payment token and the second payment token included in the transaction approval command from the payment information generator.

9. A payment terminal comprising:
a transmission interface configured to output a payment request command and a first payment token;
a reception interface configured to receive, from at least one payment information generator, a second payment token generated in response to the payment request command; and
a processor configured to compare the first payment token with the second payment token, and based on a result of the comparison indicating that the first payment token corresponds to the second payment token, output payment approval information.

10. The payment terminal of claim 9, wherein the payment request command corresponds to payment request from among a plurality of payment requests, and
wherein the processor is further configured to generate the first payment token encrypted with a different value for each payment request of the plurality of payment requests.

11. The payment terminal of claim 9, wherein the second payment token is a data packet generated by the at least one payment information generator based on the first payment token.

12. The payment terminal of claim 9, wherein the reception interface is further configured to receive, from the at least one payment information generator, request response information and a request response token corresponding to the payment request command.

13. The payment terminal of claim 12, wherein, based on the result of the comparison indicating that the first payment token corresponds to the second payment token, the transmission interface is configured to output an anti-collision command, and
wherein the reception interface is further configured to receive, from the at least one payment information generator, unique identification information generated based on the anti-collision command.

14. The payment terminal of claim 13, further comprising a memory configured to store at least one of the first payment token, the second payment token, and the request response token,
wherein the processor is configured to, based on a determination that the unique identification information does not correspond to the request response token, suspend a payment approval.

15. An operating method of a payment system including a payment terminal and a payment information generator, the method comprising:
outputting, by the payment terminal, a payment request command and a first payment token;
outputting, by the payment information generator, a second payment token based on the first payment token; and
based on a determination that the first payment token corresponds to the second payment token, outputting, by the payment terminal, payment approval information.
